(19) Europäisches Patentamt European Patent Office Office européen des brevets

(11) **EP 4 778 744 A1**

(12) **EUROPÄISCHE PATENTANMELDUNG**

(43) Veröffentlichungstag:
**22.07.2026 Patentblatt 2026/30**

(21) Anmeldenummer: 26152875.6

(22) Anmeldetag: **20.01.2026**

(51) Internationale Patentklassifikation (IPC):
**B60G 17/018** (2006.01)

(52) Gemeinsame Patentklassifikation (CPC):
**B60G 17/018;** B60G 2202/413; B60G 2202/416;
B60G 2400/252; B60G 2400/51; B60G 2400/60;
B60G 2500/30; B60G 2600/02; B60G 2600/042;
B60G 2800/70; B60G 2800/914

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **21.01.2025 DE 102025102014**

(71) Anmelder: **Vibracoustic SE**
**69469 Weinheim (DE)**

(72) Erfinder:
• **Vogt, Dennis**
**21339 Lüneburg (DE)**

• **Pfennig, Malte**
**22393 Hamburg (DE)**
• **Grymlas, Jan**
**21614 Buxtehude (DE)**

(74) Vertreter: **Patentanwälte Olbricht Buchhold Keulertz**
**Partnerschaft mbB**
**Neue Mainzer Straße 75**
**60311 Frankfurt am Main (DE)**

Bemerkungen:
Geänderte Patentansprüche gemäss Regel 137(2) EPÜ.

(54) **VERFAHREN UND SYSTEM ZUM BESTIMMEN EINES ZUSTANDS EINES FAHRZEUGS**

(57) Die vorgestellte Erfindung betrifft ein Verfahren (100) zum Bestimmen eines Zustands eines Fahrzeugs, wobei das Verfahren (100) umfasst:
- Ermitteln (101) eines statischen Drucks in mindestens einem Hydraulikaktuator (205) eines Höheneinstellungssystems (201) zum Verändern der Höhe des Fahrzeugs,
- Zuordnen (103) eines Zustands des Fahrzeugs zu dem ermittelten statischen Druck, anhand eines vorgegebenen Zuordnungsschemas,

- Ausgeben (105) des Zustands des Fahrzeugs,

wobei der statische Druck in dem mindestens einen Hydraulikaktuator (205) anhand einer Drehzahl und eines elektrischen Betriebsparameters eines Pumpmotors einer Pumpe (213) an mindestens zwei vorgegebenen Arbeitspunkten der Pumpe beim Fördern von Hydraulikfluid in den mindestens einen Hydraulikaktuator ermittelt wird.

Fig. 1

EP 4 778 744 A1

**Beschreibung**

Die Erfindung betrifft ein Verfahren zum Bestimmen eines Zustands eines Fahrzeugs gemäß Anspruch 1, ein System zum Bestimmen eines Zustands eines Fahrzeugs gemäß Anspruch 13 und ein Programmprodukt gemäß Anspruch 14.

Erfindungsgemäße Merkmale sind in Anspruch 1 angegeben. Ausgestaltungen sind Gegenstand der Ansprüche 2 bis 12.

Zum Ermitteln eines Beladungszustands eines Fahrzeugs werden in der Regel mehrere Sensoren, wie bspw. Druckmesser, benötigt. Derartige Sensoren sind teuer und fehleranfällig.

Der Bedarf den Druck von Niveauregulierungs-Aktuatoren zu bestimmen, ist durch Luftfedersysteme bekannt. Die Bestimmung des Luftfederdrucks erlaubt Rückschlüsse auf den Beladungszustand eines Fahrzeugs. Diese Systeme verwenden aus Kostengründen typischerweise nur einen einzelnen, zentralen Drucksensor, der im Ventilblock verbaut ist. Damit dieser den statischen Druck der einzelnen Luftfedern erfassen kann, werden die Ventile zu einer oder mehreren Luftfedern geöffnet. Gleichzeitig muss verhindert werden, dass der Druck aus dem Ventilblock entweicht, wofür die Auslassleitung durch ein elektrisch steuerbares Ablassventil verschlossen wird. Nachteilig an dieser Lösung sind die Notwendigkeit eines Drucksensors, eines elektrisch steuerbaren Ablassventils, sowie der korrespondierenden Schnittstellen zum Steuergerät.

Eine andere Möglichkeit ist die direkte Druckmessung in den Aktuatoren. Nachteilig ist hier die Notwendigkeit eines Drucksensors pro Aktuator samt dazugehöriger Verkabelung und Signalschnittstellen zum Steuergerät.

Die DE 10 2022 213630 A1 beschreibt ein Verfahren, bei dem Druckspitzen in einem Drucksystem mittels einer spezifisch berechneten Drehzahlanpassung einer Pumpe vermieden werden.

Die DE 10 2022 208706 A1 beschreibt ein Verfahren, bei dem ein Gasdruck, ein Strom und eine Temperatur in einem Aktuator zum Berechnen einer Niveaulage verwendet werden.

Die DE 19 511 591 A1 beschreibt ein System zur Beladungserkennung für ein Fahrzeug.

Vor diesem Hintergrund ist es eine Aufgabe der vorgestellten Erfindung, eine Möglichkeit zum Bestimmen eines Zustands eines Fahrzeugs, insbesondere dessen Beladungszustand, bereitzustellen, die robust und kosteneffizient ist.

Es wird somit gemäß einem ersten Aspekt der vorgestellten Erfindung ein Verfahren zum Bestimmen eines Zustands eines Fahrzeugs vorgestellt.

Das vorgestellte Verfahren umfasst das Ermitteln eines statischen Drucks in mindestens einem Hydraulikaktuator eines Höheneinstellungssystems zum Verändern der Höhe des Fahrzeugs, das Zuordnen eines Zustands des Fahrzeugs zu dem ermittelten statischen Druck, anhand eines vorgegebenen Zuordnungsschemas und das Ausgeben des Zustands des Fahrzeugs, wobei der statische Druck in dem mindestens einen Hydraulikaktuator anhand einer Drehzahl und eines elektrischen Betriebsparameters eines Pumpmotors einer Pumpe an mindestens zwei vorgegebenen Arbeitspunkten der Pumpe beim Fördern von Hydraulikfluid in den mindestens einen Hydraulikaktuator ermittelt wird.

Unter der Ausgabe eines Zustands ist im Kontext der vorgestellten Erfindung ein Vorgang zu verstehen, bei dem eine den Zustand beschreibende Meldung ausgegeben, d. h. bspw. in einen Speicher, insbesondere einen Fehlerspeicher übertragen und/oder zu einer Verarbeitungsfunktion übertragen und/oder auf einer Ausgabeeinheit, bspw. einem Bildschirm, dargestellt wird.

Um den Einsatz von zusätzlicher Sensorik zu vermeiden, basiert das vorgestellte Verfahren auf einem Ansatz, bei dem der statische Druck in mindestens einem Hydraulikaktuator aus bereits vorhandenen oder leicht ermittelbaren Messgrößen zur Regelung einer Motor-Pumpen-Einheit des Höheneinstellungssystems ermittelt wird.

Mittels des vorgestellten Verfahrens ist es möglich, den statischen Druck in dem mindestens einen Hydraulikaktuator des Höheneinstellungssystems zuverlässig zu ermitteln, obwohl die Leitungsverluste in der Regel eine deutliche Differenz zwischen Pumpenausgang und Aktuator verursachen und von mehreren, nicht messtechnisch erfassten Einflussfaktoren abhängen.

Dazu ist vorgesehen, dass ein Fluidvolumen in mindestens einem Hydraulikaktuator des Höheneinstellungssystems verändert wird. Hierdurch wird die Länge dieses Hydraulikaktuators geändert. Dadurch, dass der Hydraulikaktuator zwischen dem Fahrwerk und dem Fahrzeugaufbau positioniert ist, bewirkt die Längenänderung ein vertikales Verfahren des Aufbaus.

Ein Volumenstrom des Fluidvolumens durch die Leitungen des Höheneinstellungssystems wird durch eine Pumpe generiert, die von einem Elektromotor angetrieben wird, deren Übersetzungsverhältnis bekannt ist. Elektromechanische Ventile ermöglichen es, den Volumenstrom zu einzelnen Hydraulikaktuatoren zu unterbinden. Bspw. kann ein weiteres Ventil verwendet werden, um einen Volumenstrom von jeweiligen Hydraulikaktuatoren zu einem Reservoir einzustellen, ohne die Pumpe rückwärts laufen zu lassen.

Der Motor der Pumpe wird durch ein Steuergerät geregelt. Dieses Steuergerät kann unter anderem die Stromaufnahme sowie die Drehzahl des Motors direkt oder indirekt erfassen. Weiterhin erlaubt es, den Motorstrom zu regeln. Führungsgrößen für diese Regelung können neben anderen der Motorstrom (Stromregelung) oder die Motordrehzahl (Drehzahlregelung) sein.

Dabei gelten folgende Zusammenhänge:
Das generierte Drehmoment eines Elektromotors $M_M$ korrespondiert zu seiner Stromaufnahme $I$. Für die in dieser Applikation verwendeten Motorentypen kann ein linearer Zusammenhang angenommen werden: $M_M = m_1 \cdot I + n_1$. Die Kostanten $m_1$ und $n_1$ hängen von den konstruktiven Daten des Motors ab.

**Sofern das** Übersetzungsverhältnis zwischen Motor und Pumpe 1:1 beträgt, entspricht das Motormoment auch dem Antriebsmoment der Pumpe. Andernfalls ist hier der Übersetzungsfaktor f zu berücksichtigen: $M_P = \frac{M_M}{f}$

Das Antriebsmoment einer Pumpe $M_P$ korrespondiert zu dem von ihr generierten Druck $p_P$. Für die in dieser Applikation verwendeten Pumpentypen kann ein linearer Zusammenhang angenommen werden: $p_P = m_2 \cdot M_P + n_2$. Die Kostanten $m_2$ und $n_2$ hängen von den konstruktiven Daten der Pumpe ab.

Durch diese Zusammenhänge kann der Pumpendruck direkt aus dem ermittelten Motorstrom berechnet werden: $p_P = m_3 \cdot I + n_3$. Die Kostanten $m_3$ und $n_3$ hängen von den konstruktiven Daten der Motor-Pumpen-Kombination ab.

Sofern das Übersetzungsverhältnis zwischen Motor und Pumpe 1:1 beträgt, entspricht die Motordrehzahl $n_M$ auch der Drehzahl der Pumpe $n_P$. Andernfalls ist hier der Übersetzungsfaktor $f$ zu berücksichtigen: $n_P = n_M \cdot f$

Die Drehzahl der Pumpe $n_P$ korrespondiert zu dem durch sie geförderten Volumenstrom $Q$: $Q = n_p \cdot V \cdot \eta_V$. Dabei bezeichnet $V$ das Verdrängungsvolumen; ein konstanter Parameter, der von den konstruktiven Daten der Pumpe abhängt. $\eta_V$ bezeichnet den volumetrischen Wirkungsgrad.

Der volumetrische Wirkungsgrad nimmt typischerweise bei steigendem Pumpendruck ab. Dieser Effekt kann hinreichend genau durch eine lineare Formel (1) wiedergegeben werden:

$$n_V = m_4 \cdot p_P + n_4 \ (1)$$

Die Kostanten $m_4$ und $n_4$ hängen vorwiegend von den konstruktiven Daten der Pumpe ab.

Wenn die Pumpe einen Volumenstrom generiert, strömt Fluid durch die Rohrleitungen, Ventile, Anschlüsse etc. Hierbei treten Druckverluste durch Strömungswiderstände auf. Der Druck am Pumpenausgang ist also höher als der Druck im hydraulischen Verbraucher bzw. Hydraulikaktuator.

Im Umkehrschluss bedeutet das, dass ein aus dem Pumpenmotorstrom errechneter Pumpendruck keinen direkten Aufschluss über den Druck im Aktuator zulässt. Hierfür ist Kenntnis über die Höhe Druckverlustes $\Delta p$ erforderlich, sodass dieser vom Pumpendruck subtrahiert werden kann. Jedoch ist der Druckverlust kein gleichbleibender Wert, sondern unter anderen abhängig von der Länge und Formgebung der durchströmten Elemente, den Strömungsgeschwindigkeiten und der Viskosität des geförderten Fluids. Während die Beschaffenheit der Leitungen und Ventile möglicherweise bekannt und konstant ist, ist die Viskosität des Fluids oftmals unbekannt, da variabel. So weisen viele Hydraulikfluide eine stark temperaturabhängige Viskosität auf. Die genaue Erfassung der Temperatur ist insbesondere bei verzweigten Hydrauliksystemen aufwändig, da diese an verschiedenen Stellen im System unterschiedlich sein kann; insbesondere da Dissipation im Betrieb zu lokaler Erwärmung führt. Weiter lassen normative Anforderungen bei Hydraulikfluiden oft weite Toleranzen bezüglich der Viskosität vor, indem sie beispielsweise lediglich Grenzwerte anstatt zulässige Wertebereiche definieren.

Gemäß bernoullischer Druckgleichung (2) gibt es noch weitere Faktoren, die einen Unterschied zwischen einem Druck, der am Pumpenausgang gemessen wird, und einem, der im Aktuator gemessen wird, verursachen. Dies werden der Vollständigkeit halber erläutert; es sei jedoch vorweggenommen, dass diese Effekte für die hier beschriebene Anwendung keine Signifikanz haben:

$$p_P = \frac{\rho}{2} \cdot u^2 + p + \rho \cdot g \cdot z \ (2)$$

Der erste Summand beschreibt den dynamischen Druck und besagt, dass die Strömungsgeschwindigkeit $u$ zu einer Druckänderung führt. Bei den vorliegenden Strömungsgeschwindigkeiten besteht jedoch keine Signifikanz. Andernfalls könnte der Summand jedoch unter Kenntnis des Volumenstroms sowie des effektiven Rohrdurchmessers und der Dichte $\rho$ des Fluids berücksichtigt werden.

Der dritte Summand beschreibt den hydrostatischen Druck. Sofern die geodätische Höhendifferenz z zwischen Pumpe und Aktuator gering ist, ist auch dieser Faktor nicht signifikant.

Der zweite Summand, der Betriebsdruck, verbleibt daher der einzig signifikante und wird nachfolgend alleinig berücksichtigt.

Das vorgestellte Verfahren basiert darauf, dass, um Druckverluste im Höheneinstellungssystem zu erfassen, ohne genaue Kenntnis über die Eigenschaften des Fluids sowie der hydraulischen Komponenten hinter der Pumpe zu benötigen, der Effekt genutzt wird, dass der Zusammenhang zwischen dem Volumenstrom Q und dem Druckverlust $\Delta p$ mit

ausreichender Genauigkeit bekannt ist. So ist dieser Zusammenhang bei rein laminarer Strömung linear und bspw. mittels Formel (3) zu berechnen:

$$p_p = m_5 \cdot Q + n_5 \ (3)$$

Die Steigung $m_5$ hängt von den unbekannten Eigenschaften des Fluids sowie der hydraulischen Komponenten hinter der Pumpe ab und kann daher zunächst nicht bestimmt werden. Der Koeffizient $n_5$ ist der Druck, der am Pumpenausgang herrschen würde, wenn der Volumenstrom null beträgt. Es ist bereits bekannt, dass die Druckverluste durch das Durchströmen des Fluids durch die hydraulischen Komponenten hinter der Pumpe entstehen. Entsprechend entstehen bei einem nichtvorhandenen Volumenstrom auch keine Druckverluste. Also entspricht der Koeffizient $n_5$ dem statischen Systemdruck an der Pumpe, sodass gilt: $n_5 = p_{static}$

Da bei statischen Verhältnissen der Druck in allen fluidtechnisch verbundenen Bauteilen gleich ist und zwischen Pumpe und Aktuator keine signifikante Höhendifferenz besteht, entspricht dieser Druck auch gleichzeitig dem gesuchten Druck im Hydraulikaktuator: $p_{Actor} = p_{static}$

Somit verbleibt die Bestimmung der Steigung $m_5$. Hierzu wird die Pumpe erfindungsgemäß kurz hintereinander in zwei unterschiedlichen Arbeitspunkten betrieben, wobei jeweils der Volumenstrom $Q$ sowie der Druck am Pumpenausgang $p_P$ ermittelt wird. Dabei gilt für den ersten Arbeitspunkt $A$: $p_{p,A} = m_5 \cdot Q_A + n_5$ und für den zweiten Arbeitspunkt $B$: $p_{p,B} = m_5 \cdot Q_B + n_5$ Durch Einsetzen der Formeln ergibt sich Formel (4):

$$p_{Actor} = p_{Static} = n_5 = p_{p,A} - Q_A \cdot \frac{p_{p,B} - p_{p,A}}{Q_B - Q_A} \ (4)$$

Entsprechend kann vorgesehen sein, dass der Druck in dem mindestens einen Hydraulikaktuator anhand des folgenden mathematischen Zusammenhangs (5) ermittelt wird:

$$p_{Actor} = p_{p,A} - Q_A \cdot \frac{p_{p,B} - p_{p,A}}{Q_B - Q_A} \ (5)$$

wobei $p_{Actor}$ dem Druck in dem mindestens einen Hydraulikaktuator, $p_{p,A}$ einem Pumpendruck an dem ersten Arbeitspunkt, $p_{p,B}$ einem Pumpendruck an dem zweiten Arbeitspunkt, $Q_A$ einem Volumenstrom am Pumpenausgang an dem ersten Arbeitspunkt und $Q_B$ einem Volumenstrom am Pumpenausgang an dem zweiten Arbeitspunkt entspricht.

Alternativ kann vorgesehen sein, dass der statische Druck anhand einer nichtlinearen Funktion ermittelt wird, wobei die nichtlineare Funktion anhand von Drücken und/oder Drehzahlen an verschiedenen vorgegebenen Arbeitspunkten ermittelt wird.

Sobald der statische Druck in mindestens einem Hydraulikaktuator bekannt ist, kann diesem mittels eines Zuordnungsschemas ein Zustand des Fahrzeugs, wie bspw. ein Fehlerzustand oder ein Beladungszustand, zugeordnet werden. Dazu kann das Zuordnungsschema bspw. eine vorgegebene Tabelle mit Werten bzw. Wertebereichen des statischen Drucks umfassen, die jeweiligen Zuständen zugeordnet sind.

Sobald der Zustand des Fahrzeugs bekannt ist, kann dieser bspw. in einen Fehlerspeicher und/oder auf einer Anzeige ausgegeben werden.

Es kann vorgesehen sein, dass die Meldung eine Warnung umfasst, die einen kritischen Beladungszustand des Fahrzeugs meldet, für den Fall, dass der ermittelte statische Druck über einem vorgegebenen Schwellenwert liegt.

Durch einen Abgleich des ermittelten statischen Drucks mit einem vorgegebenen Schwellenwert kann ein Nutzer über bspw. eine Überladung oder eine Falschladung informiert werden.

Es kann weiterhin vorgesehen sein, dass der statische Druck in dem mindestens einen Hydraulikaktuator anhand einer ersten Drehzahl und eines ersten elektrischen Betriebsparameters des Pumpmotors an einem ersten vorgegebenen Arbeitspunkt, sowie einer zweiten Drehzahl und eines zweiten elektrischen Betriebsparameters an einem vorgegebenen zweiten Arbeitspunkt ermittelt wird, wobei der erste Arbeitspunkt und der zweite Arbeitspunkt unterschiedlich sind.

Eine Kombination aus Drehzahl und einem elektrischen Betriebsparameter, wie bspw. ein von der Pumpe gezogener elektrischer Strom an zwei verschiedenen Arbeitspunkten, hat sich als geeignet zum Bestimmen des statischen Drucks in einem jeweiligen Hydraulikaktuator erwiesen.

Es kann weiterhin vorgesehen sein, dass die mindestens zwei Arbeitspunkte unterschiedliche Förderdrücke und Fördervolumenströme aufweisen.

Durch unterschiedliche Förderdrücke und Fördervolumina an den mindestens zwei Arbeitspunkten kann der statische Druck valide und recheneffizient bestimmt werden.

Es kann weiterhin vorgesehen sein, dass die mindestens zwei Arbeitspunkte eingestellt werden, durch einen der folgenden Parameter zur Regelung des Pumpenstroms der folgenden Liste an Parametern: Drehzahl oder Stromaufnahme des Motors, Volumenstrom oder Druck der Pumpe, elektrische oder hydraulische Leistung.

Durch Änderung eines Regelungsparameters können die erfindungsgemäß vorgesehenen mindestens zwei Arbeitspunkte indirekt eingestellt werden, ohne deren Parameter direkt einzustellen.

Es kann weiterhin vorgesehen sein, dass der elektrische Betriebsparameter des Pumpmotors eine Stromaufnahme des Pumpmotors und/oder eine Leistungsaufnahme des Pumpmotors bei bekannter Versorgungsspannung und/oder einen ermittelten Phasenwinkel umfasst.

Anhand der Betriebsparameter Stromaufnahme des Pumpmotors und/oder Leistungsaufnahme des Pumpmotors bei bekannter Versorgungsspannung und/oder ermittelter Phasenwinkel kann eine Leistung des Pumpmotors präzise ermittelt werden.

Es kann weiterhin vorgesehen sein, dass für jeden Arbeitspunkt der Förderdruck und Fördervolumenstrom ermittelt wird.

Bspw. kann vorgesehen sein, dass der Förderdruck durch einen Drucksensor ermittelt wird.

Es kann weiterhin vorgesehen sein, dass der Förderdruck aus einem elektrischen Betriebsparameter des Pumpenmotors, wie bspw. der Stromaufnahme oder dem Phasenwinkel abgeleitet wird.

Unter Verwendung eines elektrischen Betriebsparameter des Pumpenmotors zum Bestimmen des Förderdrucks kann auf einen Drucksensor zum Bestimmen des Förderdrucks verzichtet werden.

Es kann weiterhin vorgesehen sein, dass der Fördervolumenstrom durch einen Volumenstromsensor ermittelt wird.

Es kann weiterhin vorgesehen sein, dass der Fördervolumenstrom aus einem elektrischen Betriebsparameter des Pumpenmotors, wie bspw. der Drehzahl abgeleitet wird.

Unter Verwendung eines elektrischen Betriebsparameter des Pumpenmotors zum Bestimmen des Fördervolumenstrom kann auf einen Volumenstromsensor zum Bestimmen des Fördervolumenstroms verzichtet werden.

Es kann weiterhin vorgesehen sein, dass beim Ermitteln des statischen Drucks in dem mindestens einen Hydraulikaktuator ein volumetrischer Wirkungsgrad berücksichtigt wird, wobei der volumetrische Wirkungsgrad mittels eines Kennfelds, einer linearen Formel oder einer nicht-linearen Formel ermittelt wird oder als konstant angenommen wird, und/oder der volumetrische Wirkungsgrad abhängig von einer Temperatur des mindestens einen Hydraulikaktuators, einer Umgebungstemperatur und/oder einer Anzahl Betriebsstunden des mindestens einen Hydraulikaktuators formuliert wird.

Zum Berechnen des Wirkungsgrads für die beiden Arbeitspunkte können bspw. die Formeln (6) und (7) verwendet werden:

$$n_{V,A} = m_4 \cdot p_{P,A} + n_4 \quad (6)$$

$$n_{V,B} = m_4 \cdot p_{P,B} + n_4 \quad (7)$$

Es kann weiterhin vorgesehen sein, dass die Drehzahl des Pumpmotors mittels eines Sensors gemessen oder aus einem Drehfeld des Pumpmotors abgeleitet oder anhand eines Verlaufs eines von dem Pumpmotor gezogenen elektrischen Stroms ermittelt wird.

Es kann weiterhin vorgesehen sein, dass die Pumpe ein veränderbares Verdrängungsvolumen aufweist und das vorgestellte Verfahren anhand eines jeweiligen eingestellten Verdrängungsvolumens durchgeführt wird.

Um einen Einfluss durch eine veränderbare Verdrängungsgeometrie auf das vorgeschlagene Verfahren zu minimieren, kann diese Verdrängungsgeometrie während des vorgestellten Verfahrens konstant gehalten bzw. auf einen festen Wert eingestellt werden.

Es kann weiterhin vorgesehen sein, dass beim Ermitteln des statischen Drucks in dem mindestens einen Hydraulikaktuator eine geodätische Druckdifferenz unter Kenntnis einer Dichte des Fluids $\rho$ sowie einer Höhendifferenz z zwischen Pumpenausgang und Aktuator gemäß dem folgenden mathematischen Zusammenhang nach Formel (8) berücksichtigt wird:

$$p_{Actor} = p_{static} + \rho \cdot g \cdot z \quad (8)$$

Unter Kenntnis einer geodätischen Druckdifferenz kann deren Einfluss auf einen für einen jeweiligen Hydraulikaktuator ermittelten statischen Druck kompensiert werden.

Gemäß einem zweiten Aspekt betrifft die vorgestellte Erfindung ein System zum Bestimmen eines Zustands eines Fahrzeugs.

Das vorgestellte System umfasst ein Höheneinstellungssystem zum Verändern der Höhe des Fahrzeugs und eine Recheneinheit, wobei die Recheneinheit dazu konfiguriert ist, eine mögliche Ausgestaltung des vorgestellten Verfahrens auszuführen.

Unter einer Recheneinheit ist im Kontext der vorgestellten Erfindung ein Computer, insbesondere ein Cloud-Computer, ein Prozessor, ein Steuergerät oder jeder weitere programmierbare Schaltkreis zu verstehen.

Gemäß einem dritten Aspekt betrifft die vorgestellte Erfindung ein Programmprodukt, wobei das Programmprodukt Programmcodemittel umfasst, die, wenn das Programmprodukt auf einer Recheneinheit ausgeführt wird, die Recheneinheit dazu konfigurieren, eine mögliche Ausgestaltung des vorgestellten Verfahrens auszuführen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:

Fig. 1　eine mögliche Ausgestaltung des vorgestellten Verfahrens,

Fig. 2　eine mögliche Ausgestaltung des vorgestellten Systems,

Fig. 3　eine mögliche Ausgestaltung des vorgestellten Programmprodukts mit einem Algorithmus zur Durchführung des vorgestellten Verfahrens.

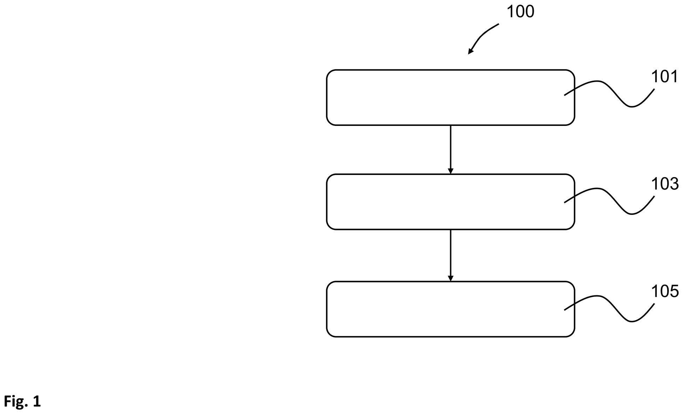

In Fig. 1 ist ein Verfahren 100 zum Bestimmen eines Zustands eines Fahrzeugs.

Das Verfahren 100 umfasst einen Ermittlungsschritt 101, bei dem ein statischer Druck in mindestens einem Hydraulikaktuator eines Höheneinstellungssystems zum Verändern der Höhe des Fahrzeugs, ermittelt wird.

Weiterhin umfasst das Verfahren 100 einen Zuordnungsschritt 103, bei dem ein Zustand des Fahrzeugs zu dem ermittelten statischen Druck, anhand eines vorgegebenen Zuordnungsschemas, zugeordnet wird.

Weiterhin umfasst das Verfahren 100 einen Ausgabeschritt 105, bei dem der Zustand des Fahrzeugs ausgegeben wird.

Es ist vorgesehen, dass der statische Druck in dem mindestens einen Hydraulikaktuator anhand einer Drehzahl und eines elektrischen Betriebsparameters eines Pumpmotors einer Pumpe an mindestens zwei vorgegebenen Arbeitspunkten der Pumpe beim Fördern von Hydraulikfluid in den mindestens einen Hydraulikaktuator ermittelt wird.

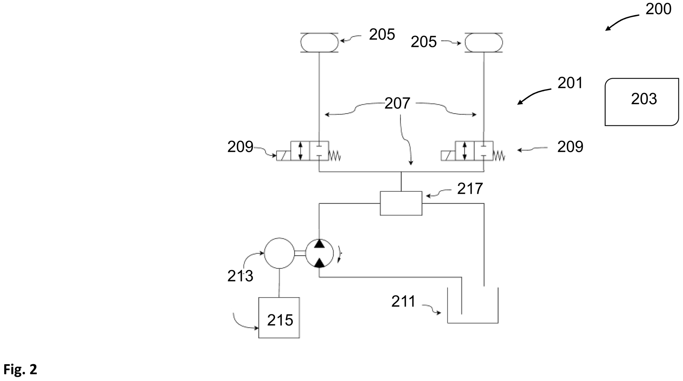

In Fig. 2 ist ein System 200 zum Bestimmen eines Zustands eines Fahrzeugs dargestellt.

Das System 200 umfasst ein Höheneinstellungssystem 201 zum Verändern der Höhe des Fahrzeugs und eine Recheneinheit 203, wobei die Recheneinheit 203 dazu konfiguriert ist, das Verfahren 100 gemäß Fig. 1 auszuführen.

Vorliegend umfasst das Höheneinstellungssystem 201 mehrere Hydraulikaktuatoren 205, die über Leitungen 207 und elektromechanische Ventile 209 mit einem Hydraulikfluidreservoir 211 gekoppelt sind.

Eine Pumpe 213 würde über ein Steuergerät 215 geregelt bzw. eingestellt.

Über ein optionales Stellventil 217 kann ein Volumenstrom von den Hydraulikaktuatoren 205 zum Hydraulikfluidreservoir 211 eingestellt werden, ohne die Pumpe 213 rückwärts laufen zu lassen, sodass ein Arbeitspunkt der Pumpe frei eingestellt werden kann.

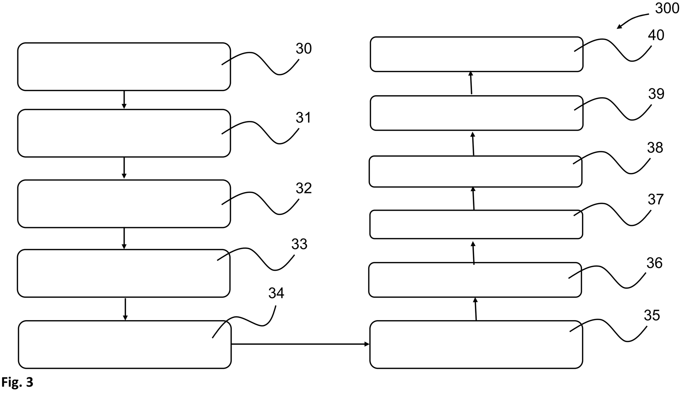

In Fig. 3 ist ein Algorithmus 300 zur Durchführung des Verfahrens 100 gemäß Fig. 1 dargestellt.

Folgende Parameter werden vorab rechnerisch oder messtechnisch ermittelt und in der Software verfügbar gemacht:

Übersetzungsverhältnis zwischen Motor und Pumpe: $f$
Verdrängungsvolumen der Pumpe: $V$
Konstanten zur Berechnung des Pumpendrucks: $m_3$, $n_3$
Konstanten zur Berechnung des volumetrischen Wirkungsgrades: $m_4$, $n_4$

Folgende Schritte werden während des Algorithmus 300 durchgeführt

30: Der Algorithmus 300 startet.
31: Einregelung des stationären Arbeitspunktes A
32: Ermittlung von der Motordrehzahl $n_{M,A}$ sowie des Motorstroms $I_A$
33: Einregelung des stationären Arbeitspunktes B
34: Ermittlung von der Motordrehzahl $n_{M,B}$ sowie des Motorstroms $I_B$
35: Berechnung der Pumpendrücke für beide Arbeitspunkte anhand der folgenden Formeln:

$$p_{P,A} = m_3 \cdot \frac{I_A}{f} + n_3$$

$$p_{P,B} = m_3 \cdot \frac{I_B}{f} + n_3$$

36: Berechnung des volumetrischen Wirkungsgrades für beide Arbeitspunkte anhand der folgenden Formeln:

$$n_{V,A} = m_4 \cdot p_{P,A} + n_4$$

$$n_{V,B} = m_4 \cdot p_{P,B} + n_4$$

37: Berechnung der Pumpendrehzahlen für beide Arbeitspunkte anhand der folgenden Formeln:

$$n_{P,A} = n_{M,A} \cdot f$$

$$n_{P,B} = n_{M,B} \cdot f$$

38: Berechnung der Volumenströme für beide Arbeitspunkte anhand der folgenden Formeln:

$$Q_A = n_{p,A} \cdot V_A \cdot \eta_{V,A}$$

$$Q_B = n_{p,A} \cdot V_B \cdot \eta_{V,B}$$

39: Berechnung des statischen Drucks anhand der folgenden Formel:

$$p_{Static} = p_{p,A} - Q_A \cdot \frac{p_{p,B} - p_{p,A}}{Q_B - Q_A}$$

40: Der Algorithmus 300 endet.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | |
|---|---|
| 100 | Verfahren |
| 101 | Ermittlungsschritt |
| 103 | Zuordnungsschritt |
| 105 | Ausgabeschritt |
| 200 | System |
| 201 | Höheneinstellungssystem |
| 203 | Recheneinheit |
| 205 | Hydraulikaktuatoren |
| 207 | Leitungen |
| 209 | elektromechanische Ventile |
| 211 | Hydraulikreservoir |
| 213 | Pumpe |
| 215 | Steuergerät |
| 217 | Stellventil |
| 300 | Algorithmus |
| 30 | Start |

31      Einregelung eines ersten Arbeitspunkts
32      Ermittlung einer ersten Motordrehzahl und eines ersten Motorstroms
33      Einregelung eines zweiten Arbeitspunkts
34      Ermittlung einer zweiten Motordrehzahl und eines zweiten Motorstroms
35      Berechnung der Pumpendrücke
36      Berechnung des volumetrischen Wirkungsgrades
37      Berechnung der Pumpendrehzahlen
38      Berechnung der Volumenströme
39      Berechnung des statischen Drucks
40      Ende

**Patentansprüche**

1.  Verfahren (100) zum Bestimmen eines Zustands eines Fahrzeugs,

    wobei das Verfahren (100) umfasst:

    - Ermitteln (101) eines statischen Drucks in mindestens einem Hydraulikaktuator (205) eines Höheneinstellungssystems (201) zum Verändern der Höhe des Fahrzeugs,
    - Zuordnen (103) eines Zustands des Fahrzeugs zu dem ermittelten statischen Druck, anhand eines vorgegebenen Zuordnungsschemas,
    - Ausgeben (105) des Zustands des Fahrzeugs,

    wobei der statische Druck in dem mindestens einen Hydraulikaktuator (205) anhand einer Drehzahl und eines elektrischen Betriebsparameters eines Pumpmotors einer Pumpe (213) an mindestens zwei vorgegebenen Arbeitspunkten der Pumpe beim Fördern von Hydraulikfluid in den mindestens einen Hydraulikaktuator ermittelt wird.

2.  Verfahren (100) nach Anspruch 1,
    **dadurch gekennzeichnet,**
    **dass** das Verfahren (100) weiterhin umfasst:

    - Ausgeben einer Meldung, die den Zustand des Fahrzeugs beschreibt, auf einer Ausgabeeinheit.

3.  Verfahren (100) nach Anspruch 2,
    **dadurch gekennzeichnet,**
    **dass** die Meldung eine Warnung umfasst, die einen kritischen Beladungszustand des Fahrzeugs meldet, für den Fall, dass der ermittelte statische Druck über einem vorgegebenen Schwellenwert liegt.

4.  Verfahren (100) nach einem der voranstehenden Ansprüche,
    **dadurch gekennzeichnet,**

    **dass** der statische Druck in dem mindestens einen Hydraulikaktuator (205) anhand einer ersten Drehzahl und eines ersten elektrischen Betriebsparameters des Pumpmotors an einem ersten vorgegebenen Arbeitspunkt, sowie
    einer zweiten Drehzahl und eines zweiten elektrischen Betriebsparameters an einem vorgegebenen zweiten Arbeitspunkt ermittelt wird, wobei der erste Arbeitspunkt und der zweite Arbeitspunkt unterschiedlich sind.

5.  Verfahren (100) nach Anspruch 4,
    **dadurch gekennzeichnet,**

    **dass** der statische Druck in dem mindestens einen Hydraulikaktuator (205) anhand folgendes mathematischen Zusammenhangs ermittelt wird:

$$p_{Static} = p_{p,A} - Q_A \cdot \frac{p_{p,B} - p_{p,A}}{Q_B - Q_A}$$

wobei $p_{Static}$ dem statischen Druck in dem mindestens einen Hydraulikaktuator (205), $p_{p,A}$ einem Pumpendruck an dem ersten Arbeitspunkt, $p_{p,B}$ einem Pumpendruck an dem zweiten Arbeitspunkt, $Q_A$ einem Volumenstrom am Pumpenausgang an dem ersten Arbeitspunkt und $Q_B$ einem Volumenstrom am Pumpenausgang an dem zweiten Arbeitspunkt entspricht.

6. Verfahren (100) nach einem der Ansprüche 1 bis 4,
   **dadurch gekennzeichnet,**

   **dass** der statische Druck anhand einer nichtlinearen Funktion ermittelt wird,
   wobei die nichtlineare Funktion anhand von Drücken und/oder Drehzahlen an verschiedenen vorgegebenen Arbeitspunkten ermittelt wird.

7. Verfahren (100) nach einem der voranstehenden Ansprüche,
   **dadurch gekennzeichnet,**
   **dass** die mindestens zwei Arbeitspunkte unterschiedliche Förderdrücke und Fördervolumenströme aufweisen.

8. Verfahren (100) nach einem der voranstehenden Ansprüche,
   **dadurch gekennzeichnet,**
   **dass** die mindestens zwei Arbeitspunkte durch einen der folgenden eingestellt werden: Drehzahl oder Stromaufnahme des Motors, Volumenstrom oder Druck der Pumpe (213), elektrische oder hydraulische Leistung.

9. Verfahren (100) nach einem der voranstehenden Ansprüche,
   **dadurch gekennzeichnet,**
   **dass** der elektrische Betriebsparameter des Pumpmotors

   - eine Stromaufnahme des Pumpmotors
   - und/oder eine Leistungsaufnahme des Pumpmotors bei bekannter Versorgungsspannung
   - und/oder einen ermittelten Phasenwinkel umfasst.

10. Verfahren (100) nach einem der voranstehenden Ansprüche,
    **dadurch gekennzeichnet,**

    **dass** beim Ermitteln des statischen Drucks in dem mindestens einen Hydraulikaktuator (205) ein volumetrischer Wirkungsgrad berücksichtigt wird, wobei der volumetrische Wirkungsgrad mittels eines Kennfelds, einer linearen Formel oder einer nicht-linearen Formel ermittelt wird oder als konstant angenommen wird, und/oder
    der volumetrische Wirkungsgrad abhängig von einer Temperatur des mindestens einen Hydraulikaktuators (205), einer Umgebungstemperatur und/oder einer Anzahl Betriebsstunden des mindestens einen Hydraulikaktuators (205) formuliert wird.

11. Verfahren (100) nach einem der voranstehenden Ansprüche,
    **dadurch gekennzeichnet,**
    **dass** die Drehzahl des Pumpmotors mittels eines Sensors gemessen oder aus einem Drehfeld des Pumpmotors abgeleitet oder anhand eines Verlaufs eines von dem Pumpmotor gezogenen elektrischen Stroms ermittelt wird.

12. Verfahren (100) nach einem der voranstehenden Ansprüche,
    **dadurch gekennzeichnet,**
    **dass** die Pumpe ein veränderbares Verdrängungsvolumen aufweist und das vorgestellte Verfahren anhand eines jeweiligen eingestellten Verdrängungsvolumens durchgeführt wird.

13. Verfahren (100) nach einem der voranstehenden Ansprüche,
    **dadurch gekennzeichnet,**
    **dass** beim Ermitteln des statischen Drucks in dem mindestens einen Hydraulikaktuator (205) eine geodätische Druckdifferenz unter Kenntnis einer Dichte des Fluids $\rho$ sowie einer Höhendifferenz z zwischen Pumpenausgang und Aktuator gemäß dem folgenden mathematischen Zusammenhang berücksichtigt wird:

$$p_{Actor} = p_{static} + \rho \cdot g \cdot z$$

**14.** System (200) zum Bestimmen eines Zustands eines Fahrzeugs,

wobei das System umfasst:

- ein Höheneinstellungssystem (201) zum Verändern der Höhe des Fahrzeugs,
- eine Recheneinheit (203),

wobei die Recheneinheit (203) dazu konfiguriert ist, ein Verfahren (100) nach einem der Ansprüche 1 bis 12 auszuführen.

**15.** Programmprodukt,

wobei das Programmprodukt Programmcodemittel umfasst, die, wenn das Programmprodukt auf einer Recheneinheit ausgeführt wird, die Recheneinheit dazu konfigurieren, ein Verfahren (100) nach einem der Ansprüche 1 bis 12 auszuführen.

**Geänderte Patentansprüche gemäss Regel 137(2) EPÜ.**

**1.** Verfahren (100) zum Bestimmen eines Zustands eines Fahrzeugs,

wobei das Verfahren (100) umfasst:

- Ermitteln (101) eines statischen Drucks in mindestens einem Hydraulikaktuator (205) eines Höheneinstellungssystems (201) zum Verändern der Höhe des Fahrzeugs,
- Zuordnen (103) eines Zustands des Fahrzeugs zu dem ermittelten statischen Druck, anhand eines vorgegebenen Zuordnungsschemas,
- Ausgeben (105) des Zustands des Fahrzeugs,

wobei der statische Druck in dem mindestens einen Hydraulikaktuator (205) anhand einer Drehzahl und eines elektrischen Betriebsparameters eines Pumpmotors einer Pumpe (213) an mindestens zwei vorgegebenen Arbeitspunkten der Pumpe beim Fördern von Hydraulikfluid in den mindestens einen Hydraulikaktuator ermittelt wird.

**2.** Verfahren (100) nach Anspruch 1,
**dadurch gekennzeichnet,**
**dass** das Verfahren (100) weiterhin umfasst:

- Ausgeben einer Meldung, die den Zustand des Fahrzeugs beschreibt, auf einer Ausgabeeinheit.

**3.** Verfahren (100) nach Anspruch 2,
**dadurch gekennzeichnet,**
**dass** die Meldung eine Warnung umfasst, die einen kritischen Beladungszustand des Fahrzeugs meldet, für den Fall, dass der ermittelte statische Druck über einem vorgegebenen Schwellenwert liegt.

**4.** Verfahren (100) nach einem der voranstehenden Ansprüche,
**dadurch gekennzeichnet,**

**dass** der statische Druck in dem mindestens einen Hydraulikaktuator (205) anhand einer ersten Drehzahl und eines ersten elektrischen Betriebsparameters des Pumpmotors an einem ersten vorgegebenen Arbeitspunkt, sowie
einer zweiten Drehzahl und eines zweiten elektrischen Betriebsparameters an einem vorgegebenen zweiten Arbeitspunkt ermittelt wird, wobei der erste Arbeitspunkt und der zweite Arbeitspunkt unterschiedlich sind.

**5.** Verfahren (100) nach Anspruch 4,
**dadurch gekennzeichnet,**

**dass** der statische Druck in dem mindestens einen Hydraulikaktuator (205) anhand folgendes mathematischen Zusammenhangs ermittelt wird:

$$p_{Static} = p_{p,A} - Q_A \cdot \frac{p_{p,B} - p_{p,A}}{Q_B - Q_A}$$

wobei $p_{Static}$ dem statischen Druck in dem mindestens einen Hydraulikaktuator (205), $p_{p,A}$ einem Pumpendruck an dem ersten Arbeitspunkt, $p_{p,B}$ einem Pumpendruck an dem zweiten Arbeitspunkt, $Q_A$ einem Volumenstrom am Pumpenausgang an dem ersten Arbeitspunkt und $Q_B$ einem Volumenstrom am Pumpenausgang an dem zweiten Arbeitspunkt entspricht.

6. Verfahren (100) nach einem der Ansprüche 1 bis 4,
   **dadurch gekennzeichnet,**
   **dass** der statische Druck anhand einer nichtlinearen Funktion ermittelt wird, wobei die nichtlineare Funktion anhand von Drücken und/oder Drehzahlen an verschiedenen vorgegebenen Arbeitspunkten ermittelt wird.

7. Verfahren (100) nach einem der voranstehenden Ansprüche,
   **dadurch gekennzeichnet,**
   **dass** die mindestens zwei Arbeitspunkte unterschiedliche Förderdrücke und Fördervolumenströme aufweisen.

8. Verfahren (100) nach einem der voranstehenden Ansprüche,
   **dadurch gekennzeichnet,**
   **dass** die mindestens zwei Arbeitspunkte durch einen der folgenden eingestellt werden:

   Drehzahl oder Stromaufnahme des Motors, Volumenstrom oder Druck der Pumpe (213),
   elektrische oder hydraulische Leistung.

9. Verfahren (100) nach einem der voranstehenden Ansprüche,
   **dadurch gekennzeichnet,**
   **dass** der elektrische Betriebsparameter des Pumpmotors

   - eine Stromaufnahme des Pumpmotors
   - und/oder eine Leistungsaufnahme des Pumpmotors bei bekannter Versorgungsspannung
   - und/oder einen ermittelten Phasenwinkel umfasst.

10. Verfahren (100) nach einem der voranstehenden Ansprüche,
    **dadurch gekennzeichnet,**
    **dass** beim Ermitteln des statischen Drucks in dem mindestens einen Hydraulikaktuator (205) ein volumetrischer Wirkungsgrad berücksichtigt wird, wobei der volumetrische Wirkungsgrad mittels eines Kennfelds, einer linearen Formel oder einer nicht-linearen Formel ermittelt wird oder als konstant angenommen wird, und/oder der volumetrische Wirkungsgrad abhängig von einer Temperatur des mindestens einen Hydraulikaktuators (205), einer Umgebungstemperatur und/oder einer Anzahl Betriebsstunden des mindestens einen Hydraulikaktuators (205) formuliert wird.

11. Verfahren (100) nach einem der voranstehenden Ansprüche,
    **dadurch gekennzeichnet,**
    **dass** die Drehzahl des Pumpmotors mittels eines Sensors gemessen oder aus einem Drehfeld des Pumpmotors abgeleitet oder anhand eines Verlaufs eines von dem Pumpmotor gezogenen elektrischen Stroms ermittelt wird.

12. Verfahren (100) nach einem der voranstehenden Ansprüche,
    **dadurch gekennzeichnet,**
    **dass** die Pumpe ein veränderbares Verdrängungsvolumen aufweist und das vorgestellte Verfahren anhand eines jeweiligen eingestellten Verdrängungsvolumens durchgeführt wird.

13. Verfahren (100) nach einem der voranstehenden Ansprüche,
    **dadurch gekennzeichnet,**
    **dass** beim Ermitteln des statischen Drucks in dem mindestens einen Hydraulikaktuator (205) eine geodätische Druckdifferenz unter Kenntnis einer Dichte des Fluids $\rho$ sowie einer Höhendifferenz z zwischen Pumpenausgang und Aktuator gemäß dem folgenden mathematischen Zusammenhang berücksichtigt wird:

$$p_{Actor} = p_{static} + \rho \cdot g \cdot z$$

14. Fahrzeug umfassend ein System (200) zum Bestimmen eines Zustands des Fahrzeugs, wobei das System umfasst:

- ein Höheneinstellungssystem (201), der mindestens einen Hydraulikaktuator (205) und eine Pumpe (213) zum Fördern von Hydraulikfluid in den mindestens einen Hydraulikaktuator mit einem Pumpmotor aufweist, zum Verändern der Höhe des Fahrzeugs,
- eine Recheneinheit (203),
wobei die Recheneinheit (203) dazu konfiguriert ist, ein Verfahren (100) nach einem der Ansprüche 1 bis 12 auszuführen.

$$p_{Actor} = p_{static} + \rho \cdot g \cdot z$$

**Fig. 1**

**Fig. 2**

300

30

31

32

33

34

40

39

38

37

36

35

**Fig. 3**

Europäisches Patentamt
European Patent Office
Office européen des brevets

## EUROPÄISCHER RECHERCHENBERICHT

Nummer der Anmeldung

EP 26 15 2875

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2012 014890 A1 (DAIMLER AG [DE]) 30. Januar 2014 (2014-01-30) * Zusammenfassung * * Anspruch 1 * * Absätze [0024] - [0027] *  ----- | 1-15 | INV. B60G17/018 |
| A | US 2023/141344 A1 (NIEDERT ANDREW [US] ET AL) 11. Mai 2023 (2023-05-11) * das ganze Dokument *  ----- | 1-15 | |

RECHERCHIERTE SACHGEBIETE (IPC)

B60G

Der vorliegende Recherchenbericht wurde für alle Patentansprüche erstellt

| Recherchenort | Abschlußdatum der Recherche | Prüfer |
|---|---|---|
| Den Haag | 5. Juni 2026 | Schmidt, Nico |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 26 15 2875

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-06-2026

| Im Recherchenbericht angeführtes Patentdokument | Datum der Veröffentlichung | Mitglied(er) der Patentfamilie | Datum der Veröffentlichung |
|---|---|---|---|
| DE 102012014890 A1 | 30-01-2014 | DE 102012014890 A1 | 30-01-2014 |
| | | WO 2014015963 A1 | 30-01-2014 |
| US 2023141344 A1 | 11-05-2023 | US 2019315179 A1 | 17-10-2019 |
| | | US 2023141344 A1 | 11-05-2023 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102022213630 A1
- DE 102022208706 A1
- DE 19511591 A1